(19) Europäisches Patentamt
European Patent Office
Office européen des brevets

(11) **EP 4 350 695 A1**

(12) **EUROPEAN PATENT APPLICATION**

(43) Date of publication:
**10.04.2024 Bulletin 2024/15**

(21) Application number: **23196771.2**

(22) Date of filing: **12.09.2023**

(51) International Patent Classification (IPC):
**G10L 21/0208** (2013.01)     **G06N 3/08** (2023.01)

(52) Cooperative Patent Classification (CPC):
**G10L 21/0208; G06N 3/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.10.2022 GB 202214714**

(71) Applicant: **Nokia Technologies Oy**
**02610 Espoo (FI)**

(72) Inventor: **TSIAFLAKIS, Paschalis**
**2223 Heist-op-den-Berg (BE)**

(74) Representative: **Nokia EPO representatives**
**Nokia Technologies Oy**
**Karakaari 7**
**02610 Espoo (FI)**

(54) **APPARATUS, METHODS AND COMPUTER PROGRAMS FOR AUDIO SIGNAL ENHANCEMENT USING A DATASET**

(57)     Examples of the disclosure relate to apparatus, methods and computer programs for audio signal enhancement using a dataset for a target use case. In examples of the disclosure an apparatus is configured to enable access to a trained computer program. The trained computer program is configured for processing one or more audio signals to enhance audibility of sounds within the one or more audio signals. The trained computer program is trained using a generic dataset. The apparatus is also configured to obtain a dataset. The dataset comprises data samples with inputs and outputs for the computer program. The apparatus is configured to use the dataset to update the trained computer program.

**EP 4 350 695 A1**

```
┌─────────────────────┐
│  Enable access to   │ ⌒ 301
│  trained computer   │
│      program        │
└─────────────────────┘
          │
          ▼
┌─────────────────────┐
│                     │ ⌒ 303
│   Obtain dataset    │
│                     │
└─────────────────────┘
          │
          ▼
┌─────────────────────┐
│   Update trained    │ ⌒ 305
│  computer program   │
└─────────────────────┘
```

FIG. 3

## Description

TECHNOLOGICAL FIELD

Examples of the disclosure relate to apparatus, methods and computer programs for audio signal enhancement using a dataset. Some relate to apparatus, methods and computer programs for audio signal enhancement using a dataset for a target use case.

BACKGROUND

Computer programs such as machine learning models can be trained for processing audio signals. A large generic dataset is generally used for this training.

BRIEF SUMMARY

According to various, but not necessarily all, examples of the disclosure there may be provided an apparatus comprising means for:

> enabling access to a trained computer program wherein the trained computer program is configured for processing one or more audio signals to enhance audibility of sounds within the one or more audio signals and wherein the trained computer program is trained using a generic dataset;
> obtaining a dataset wherein the dataset comprises data samples with inputs and outputs for the computer program; and
> updating the trained computer program for processing one or more audio signals to enhance audibility of sounds within the one or more audio signals using the dataset wherein the updating of the trained computer program comprises training the computer program using at least part of the dataset and evaluating the performance of

the updated computer program for at least part of the dataset and for at least part of the generic dataset.

The dataset may comprise at least a subset of data that is not comprised within the generic dataset.

The dataset may comprise no data that is comprised within the generic dataset.

The obtaining of the dataset may be triggered by one or more of; an input by an end-user, a request by an end-user device, a request by an end-user application, an expiry of a time period relating to the trained computer program, an output of a similarity evaluation between the generic dataset and the dataset

The dataset may be obtained using one or more of: real world measurements; and simulators.

The updating of the trained computer program using the dataset may comprise training the computer program using a first subset of the dataset and evaluating the performance of the updated computer program using a second subset of the dataset, where the data of the first subset and the second subset are disjoint.

The updating of the trained computer program using the dataset may comprise training the computer program using a first subset of the dataset and evaluating the performance of the updated computer program using a second subset of the dataset, where the data of the first subset and the second subset are at least partly overlapping

The updating of the trained computer program may comprise an iterative process wherein respective iterations comprise evaluating the performance of the updated computer program for the at least part of the dataset and for the at least part of the generic dataset.

The means may be for evaluating the performance of the updated computer program for the at least part of the generic dataset by tracking a performance loss.

The tracking of the performance loss may comprise using inference of the updated computer program.

The means may be for obtaining a balance parameter wherein the balance parameter indicates a level of impact on the performance of the updated computer program for the at least part of the generic dataset.

The balance parameter may indicate a level of performance of the updated computer program for the at least part of the dataset that is used to evaluate the performance of the updated computer program.

The processing of the one or more audio signals may comprise at least one of: acoustic echo cancellation; noise suppression; residual echo suppression; speech enhancement; speech dereverberation; wind noise reduction; and sound source separation.

The computer program may comprise a machine learning model.

The machine learning model may comprise a neural network circuit.

According to various, but not necessarily all, examples of the disclosure there may be provided a method comprising:

> enabling access to a trained computer program wherein the trained computer program is configured for processing one or more audio signals to enhance audibility of sounds within the one or more audio signals and wherein the trained computer program is trained using a generic dataset;
> obtaining a dataset wherein the dataset comprises data samples with inputs and outputs for the computer program; and
> updating the trained computer program for processing one or more audio signals to enhance audibility of sounds within the one or more audio signals using the dataset wherein the updating of the trained computer program comprises training the computer program using at least part of the dataset and evaluating the performance of the updated computer program for at least part of the dataset and for at least part of the generic dataset.

According to various, but not necessarily all, examples of the disclosure there may be provided a computer program comprising instructions which, when executed by an apparatus, cause the apparatus to perform at least:

enabling access to a trained computer program wherein the trained computer program is configured for processing one or more audio signals to enhance audibility of sounds within the one or more audio signals and wherein the trained computer program is trained using a generic dataset;
obtaining a dataset wherein the dataset comprises data samples with inputs and outputs for the computer program; and
updating the trained computer program for processing one or more audio signals to enhance audibility of sounds within the one or more audio signals using the dataset wherein the updating of the trained computer program comprises training the computer program using at least part of the dataset and evaluating the performance of the updated computer program for at least part of the dataset and for at least part of the generic dataset.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

BRIEF DESCRIPTION

Some examples will now be described with reference to the accompanying drawings in which:

FIG. 1 shows an example system;
FIG. 2 shows an example audio processing system;
FIG. 3 shows an example method;
FIG. 4 shows an example method;
FIG. 5 shows an example performance loss plot;
FIG. 6 shows an example machine learning model;
FIG. 7 shows an example architecture for a computer program
FIG. 8 shows a plot of example results
FIGS. 9A to 9J show example system architectures;
FIG. 10 shows an example pipeline;
FIG. 11 shows an example pipeline; and
FIG. 12 shows an example apparatus.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

DETAILED DESCRIPTION

Computer programs such as machine learning models can be used for audio processing techniques such as acoustic echo cancellation, noise suppression or other audio processes. The training of such computer programs uses very large datasets. This can be problematic if the computer program is to be used for a specific use case. It is not practical to obtain very large datasets for a specific use case and also it might not even be known in advance what the specific use case is. The specific use case could be the type of device that the computer program is to be used in, a type of noise that is to be suppressed or enhanced, or any other factors.

Examples of the disclosure provide computer programs that can be trained for general use and then adapted for one or more specific use cases.

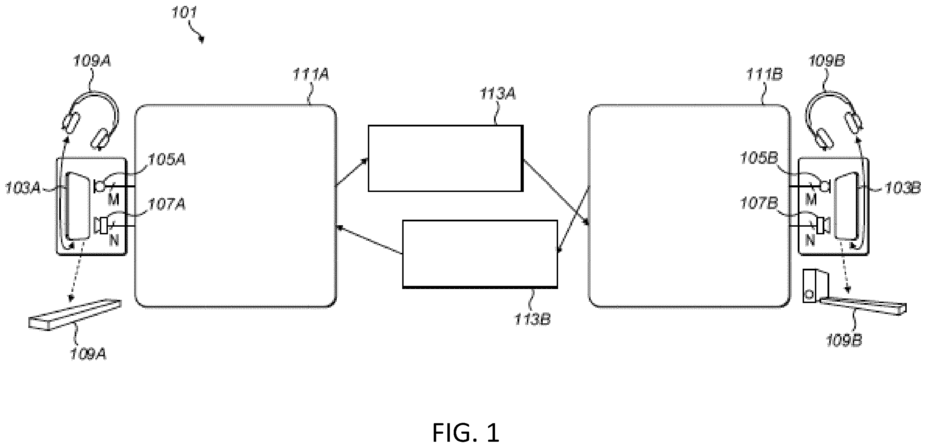

Fig. 1 shows an example system 101 that could be used to implement examples of the disclosure. In this system 101 one or more audio signals could be processed. A computer program such as a machine learning model, or any other suitable type of computer program, could be used for the audio processing.

The system 101 shown in Fig. 1 can be used for voice or other types of audio communications. Audio from a near end user can be detected, processed and transmitted for rendering and playback to a far end user. In some examples, the audio from a near-end user can be stored in an audio file for later use. Other systems and variations of this system 101 could be used in other examples.

The system 101 comprises a first user device 103A and a second user device 103B. In the example shown in Fig. 1 each of the first user device 103A and the second user device 103B comprise mobile telephones. Other types of user devices 103 could be used in other examples of the disclosure. For example, the user devices 103 could be a telephone, a tablet, a soundbar, a microphone array, a camera, a computing device, a teleconferencing device, a television, a Virtual Reality (VR) / Augmented Reality (AR) device or any other suitable type of communications device.

The user devices 103A, 103B comprise one or more microphones 105A, 105B and one or more loudspeakers 107A, 107B. The one or more microphones 105A, 105B are configured to detect acoustic signals and convert acoustic signals into output electrical audio signals. The output signals from the microphones 105A, 105B can provide a near-end signal or a noisy speech signal. The one or more loudspeakers 107A, 107B are configured to convert an input electrical signal to an output acoustic signal that a user can hear.

The user devices 103A, 103B can also be coupled to one or more peripheral playback devices 109A, 109B. The playback devices 109A, 109B could be headphones, loudspeaker set ups or any other suitable type of playback devices 109A, 109B. The playback devices 109A, 109B can be configured to enable spatial audio, or any other suitable type of audio to be played back for a user to hear. In examples where the user devices 103A, 103B are coupled to the playback devices 109A, 109B the electrical audio input signals can be processed and provided to the playback devices 109A, 109B instead of to the loudspeaker 107A, 107B of the user device 103A, 103B.

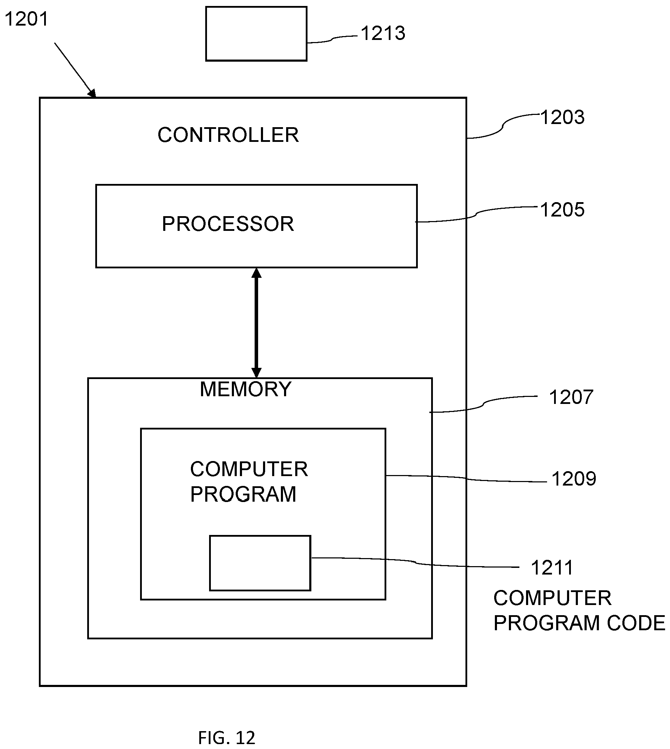

The user devices 103A, 103B also comprise audio processing means 111A, 111B. The processing means 111A,111B can comprise any means suitable for processing audio signals detected by the microphones 105A, 105B and/or processing means 111A,111B configured for processing audio signals provided to the loudspeakers 107A, 107B and/or playback devices 109A, 109B. The processing means 111A,111B could comprise one or more apparatus as shown in Fig. 12 and described below or any other suitable means.

The processing means 111A,111B can be configured to perform any suitable processing on the audio signals. For example, the processing means 111A,111B can be configured to perform acoustic echo cancellation, noise suppression, residual echo suppression, speech enhancement, speech dereverberation, wind noise reduction, sound source separation and/or any other suitable process on the signals captured by the microphones 105A, 105B. The processing means 111A,111B can be configured to perform spatial rendering and dynamic range compression on input electrical signals for the loudspeakers 107A, 107B and/or playback devices 109A, 109B. The processing means 111A,111B can be configured to perform other processes such as active gain control, source tracking, head tracking, audio focusing, or any other suitable process.

The processing means 111A, 111B can be configured to use computer programs such as machine learning models to process the audio signals. The computer programs can be trained and updated according to the examples of this disclosure.

The processed audio signals can be transmitted between the user devices 103A, 103B using any suitable communication networks. In some examples the communication networks can comprise 5G or other suitable types of networks. The communication networks can comprise one or more codecs 113A, 113B which can be configured to encode and decode the audio signals as appropriate. In some examples the codecs 113A, 113B could be IVAS (Immersive Voice Audio Systems) codecs or any other suitable types of codec.

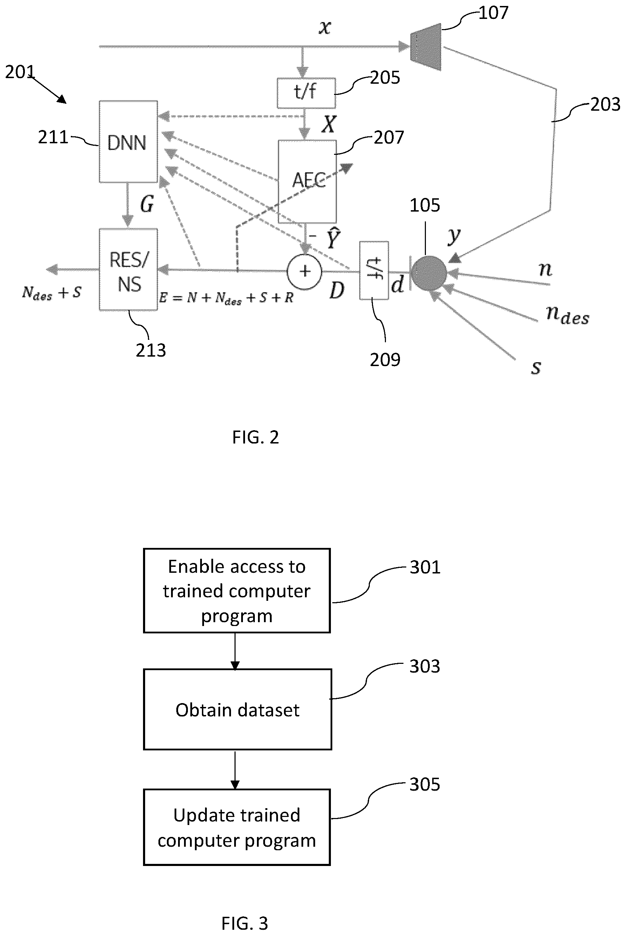

Fig. 2 shows an example audio processing system 201 that could be used in some examples of the disclosure. In this example the audio processing system 201 is for suppression of residual echo and noise. Examples of the disclosure could also be used for other types of audio processing.

The audio processing system 201 can be provided within a user device 103 such as the devices shown in Fig. 1. The user device 103 comprises one or more loudspeakers 107 and one or more microphones 105 in addition to the audio processing system 201.

Only one loudspeaker 107 and microphone 105 is shown in Fig. 2 but the user device 103 could comprise any number of loudspeakers 107 and/or microphones 105. In some examples one or more playback devices 109 could be used in place of, or in addition to the loudspeaker 107.

An echo path 203 exists between the loudspeakers 107 and the microphones 105. The echo path 203 can cause audio from the loudspeakers 107 to be detected by the microphones 105. This can create an unwanted echo within the near end signals provided by the microphones 105. The echo generated by the echo path 203 and detected by the microphone 105 is denoted as $y$ in the example of Fig. 2. This is a time-domain signal.

The user device is configured so that a far end signal $x$ is provided to the loudspeaker 107. The far end signal $x$ is configured to control the loudspeaker 107 to generate audio. The user device 103 is also configured so that the far end signal $x$ is provided as an input to a first time-frequency transform block 205. The first time-frequency transform block 205 is configured to change the domain of the far end signal $x$ from the time domain to the frequency domain (for example, the Short-Time Fourier Transform (STFT) domain). In the example of Fig. 2 the far end signal is denoted as $x$ in the time domain and $X$ in the frequency domain.

The system 201 also comprises an acoustic echo cancellation block 207. The echo cancellation block 207 can be a weighted overlap add (WOLA) based acoustic echo cancellation block 207 or could use any other suitable types of filters and processes.

The acoustic echo cancellation block 207 is configured to generate a signal corresponding to the echo y which can then be subtracted from the near end signals. The system 201 is configured so that the acoustic echo cancellation block 207 receives the frequency domain far-end signal $X$ as an input and provides a frequency domain echo signal estimate $\hat{Y}$ as an output.

The microphone 105 is configured to detect any acoustic signals. In this example the acoustic signals that are detected by the microphones 105 comprise a plurality of different components. In this example the plurality of different components comprises a speech component, (denoted as s in Fig. 2), a noise component (denoted as $n$ in Fig. 2), a desired noise component (denoted as $n_{des}$ in Fig. 2), and the echo (denoted as $y$ in Fig. 2).

The microphone 105 detects the acoustic signals and provides an electrical microphone signal or near end signal which is denoted as d in Fig. 2. The user device 103 comprises a second time-frequency transform block 209. The microphone signal d is provided as an input to the second time-frequency transform block 209. The second time-frequency transform block 209 is configured to change the domain of the microphone signal d to the frequency domain. The microphone signal is denoted as D in the frequency domain.

The user device 103 is configured so that the frequency domain microphone signal D and the frequency domain echo signal $\hat{Y}$ are combined so as to cancel the echo components within the frequency domain microphone signal D. This results in a residual error signal E. The residual error signal E is a frequency domain signal. The residual error signal E is an audio signal based on the microphone signals but comprises a noise component N, a desired noise component $N_{des}$ a speech component S and a residual echo component R. The residual echo component R exists because the acoustic echo cancellation block 207 is not perfect at removing the echo Y and a residual amount will remain.

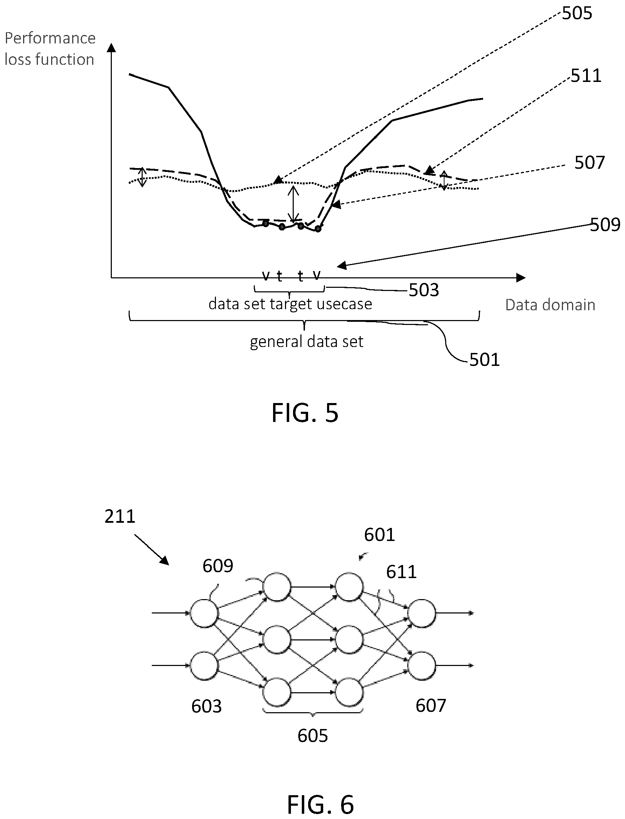

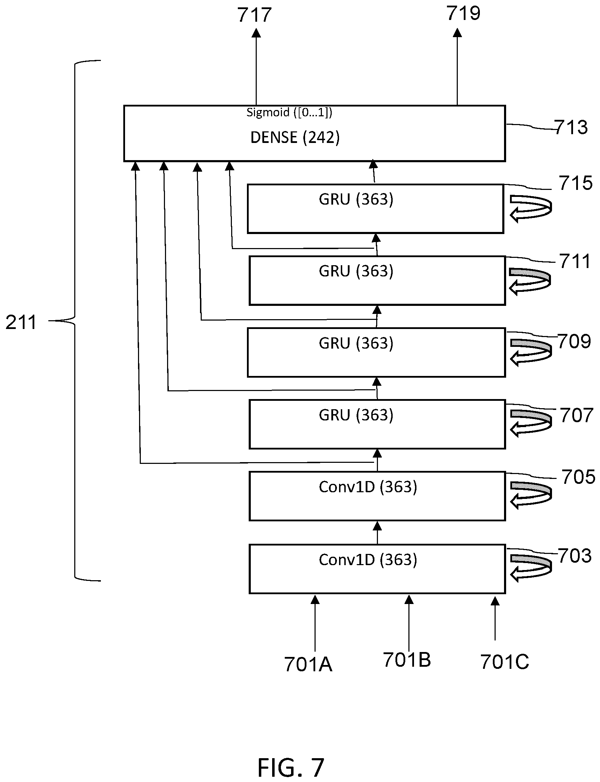

The audio processing system 201 comprises a computer program 211 that is configured to receive a plurality of inputs. The computer program 211 is a trained computer program. The computer program 211 can be a machine learning model or any other suitable type of computer program. In this example the computer program 211 comprises a deep neural network. Examples of computer programs 211 that could be used are shown in Figs. 6 and 7. Other types of programs and models could be used in other examples.

The inputs that are received by the computer program 211 can comprise any suitable inputs. In the example of Fig. 2 the computer program 211 is configured to receive the far-end signal X, the echo $\hat{Y}$, the microphone signal D, and the echo signal E as inputs. The computer program 211 could be configured to receive different inputs in other examples. In the example of Fig. 2 the inputs for the computer program 211 are received in the frequency domain.

The computer program 211 is configured to process the received inputs to provide a gain coefficient as an output. The gain coefficient is denoted a G in Fig. 2.

The gain coefficient G is provided in a control signal to the noise suppression block 213. The noise suppression block 213 is configured to remove the residual echo components R and the unwanted noise components N from the residual error signal E. The noise suppression block 213 is configured to receive the residual error signal E as an input.

The output of the noise suppression block 213 is a residual echo and/or noise suppressed microphone signal comprising the speech component S. In the example of Fig. 2 the output signal also comprises a desired noise component $N_{des}$. This signal can be processed for transmitting to a far end user.

The desired noise component can comprise ambient or background sounds that are desired. For example, a user could be in a location with a specific type of background noise and they would like to retain that noise within the audio signals so that the end users can also hear the background noise. As an example, the user could be at a sporting venue such as a karting track and might wish to retain the background noise of the karts within their audio signals.

The computer program 211 can comprise any structure that enables a processor, or other suitable apparatus, to use the input signals to generate an output for use in the processing of the audio signals. In the example of Fig. 2 the computer program 211 is configured to receive inputs based on the far end signal X, the echo signal $\hat{Y}$, the microphone signal D and the residual error signal E and to provide a gain coefficient G as an output. Other inputs and outputs could be used in some examples. The computer program 211 can comprise any structure that enables a processor, or other suitable apparatus, to use the input signals to generate the gain coefficient, or other suitable parameters, as an output

The computer program 211 can comprise a machine learning model, a neural network or any other suitable type of trainable model. The term "machine learning model" refers to any kind of artificial intelligence (AI), intelligent or other method that is trainable or tuneable using data. The machine learning model can be trained or configured to perform a task, such as creating a gain coefficient for noise reduction or residual echo cancellation based on the received inputs, without being explicitly programmed to perform that task or starting from an initial configuration. The machine learning model can be configured to learn from experience E with respect to some class of tasks T and performance measure P if its performance at tasks in T, as measured by P, improves with experience E. In these examples the machine learning model can learn from previous outputs that were obtained for the same or similar inputs. The machine learning model can be a trainable computer program. Other types of machine learning models could be used in other examples.

Any suitable process can be used to train or to configure the machine learning model The training or configuration of the machine learning model can be performed using real world or simulation data. The initial training of the machine learning model can be performed using a generic dataset. The generic dataset can cover a wide range of use cases. The training of the machine learning model can be repeated as appropriate until the machine learning model has attained a sufficient level of stability. The machine learning model has a sufficient level of stability when fluctuations in the outputs provided by the machine learning model are low enough to enable the machine learning model to be used to predict the gain coefficients for noise suppression and/or removal of residual echo or any other suitable audio processing. The machine learning model has a sufficient level of stability when fluctuations in the predictions provided by the machine learning model are low enough so that the machine learning model provides consistent responses to test inputs.

The computer program 211 can be trained using a large generic dataset. This can enable the system 201 work well for generic use cases. However, the system 201 might also be used for specific use cases. For example, there might be specific locations or audio scenes where a user might want to retain desired noise, or the system 201 could be implemented in specific types of devices or there could be any other number of factors that create specific use cases. In examples of the disclosure the computer program 211 can be updated so that it can be used for these specific use cases while still being suitable for use for the generic use cases.

Fig. 3 shows an example method that can be used to update a computer program 211 in examples of the disclosure.

At block 301 the method comprises enabling access to a trained computer program 211. The trained computer program 211 can comprise a machine learning model such as a neural network circuit or any other suitable type of trainable computer program. Examples of machine learning programs that could be used are shown in Figs. 6 and 7.

The trained computer program 211 is configured for processing one or more audio signals to enhance audibility of sounds within the one or more audio signals. The processing can comprise acoustic echo cancellation, noise suppression, residual echo suppression, speech enhancement, speech dereverberation, wind noise reduction, sound source separation or any other suitable type of processing. The trained computer program 211 can be trained for use in an audio processing system 201 as shown in Fig. 2 or could be trained for use in any other suitable system.

The trained computer program 211 is trained using a generic dataset. The generic dataset can be a large dataset that encompasses a wide range of audio settings and scenarios. The generic dataset can be a publicly available dataset.

The training of the computer program 211 can be performed by any suitable entity. In some examples the training can be performed by a third-party provider of trained computer programs 211. The training of the computer program 211 is a computationally complex process and can take multiple days on a multi-core cloud server or other suitable processing device.

The trained computer program 211 can be stored in the user device 103 or could be stored in a location so that it is accessible by the user device 103.

At block 303 the method comprises obtaining a dataset. The dataset is configured for use in updating the trained computer program 211. The dataset can be configured for use in updating the trained computer program 211 for a particular use case or scenario. The dataset comprises data samples with inputs and outputs for the computer program 211. The inputs and outputs can relate to the specific use case.

The dataset can be small compared to the generic dataset that was used to originally train the computer program 211. The dataset can be several orders of magnitude smaller than the generic dataset. For example, the generic dataset could comprise millions of datapoints while the dataset could comprise tens or hundreds of datapoints.

The dataset can comprise at least a subset of data that is not comprised within the generic dataset. In some examples the dataset can comprise no data that is comprised within the generic dataset. In such cases the generic dataset and the dataset are disjoint.

The dataset can be obtained using any suitable means. In some examples the dataset can be obtained using real world measurements, simulators or any other suitable means. The dataset can be obtained by a third party and can be retrieved or accessed for use in updating the trained computer program 211.

The obtaining of the dataset can be triggered by any suitable event. For instance, the obtaining of the dataset could be triggered by an input by an end-user, a request by an end-user device, a request by an end user application, an expiry of a time period relating to the trained computer program, an output of a similarity evaluation between the generic dataset and the dataset. The end user could be a user of a user device 103 as shown in Fig. 1 or any other suitable user. The end-user device could be a user device 103 as shown in Fig. 1 or any other suitable type of device.

At block 305 the method comprises updating the trained computer program 211 using the dataset. The training comprises training the computer program 211 using at least part of the dataset and evaluating the performance of the updated computer program 211. The performance of the updated computer program 211 can be evaluated for at least part of the dataset and for at least part of the generic dataset.

The part of the dataset that is used for the evaluation of the updated computer program 211 does not need to be the same as the part of the dataset that is used to train the computer program 211. The updating of the trained computer program 211 using the dataset can comprise training the computer program using a first subset of the dataset and evaluating the performance of the updated computer program using a second subset of the dataset. In some examples the data of the first subset and the second subset are disjoint. In such examples there is no overlap between the part of the dataset that is used for the evaluation of the updated computer program 211 and the part of the dataset that is used to update the computer program 211. In other examples the data of the first subset and the second subset can be at least partly overlapping. In some examples the second subset could be comprised within the first subset. In such examples there is a partial overlap between the part of the dataset that is used for the evaluation of the updated computer program 211 and the part of the dataset that is used to update the computer program 211.

In some examples the updating of the trained computer program 211 can comprise an iterative process. Respective iterations within the process can comprise evaluating the performance of the updated computer program 211 for the at least part of the dataset and for the at least part of the generic dataset. The part of the dataset that is used for the evaluation can be different to the part of the dataset that is used for the training of the computer program 203.

Any suitable means or processes can be used to evaluate the updated computer program 211. In some examples the evaluation of the performance of the updated computer program 211 for the at least part of the generic dataset can comprise tracking a performance loss or tracking any other suitable parameter. The tracking of the performance loss, or other parameter, can comprise using inference of the updated computer program. The inference does not require any further training of the computer program 211 and can be executed with low complexity even for the large generic dataset.

In some implementations the method can comprise blocks that are not shown in Fig. 3. For instance, in some examples the method can also comprise obtaining a balance parameter. The balance parameter can be used for the updating of the computer program 211. The updating of the computer program 211 might have a negative impact on the performance of the computer program 211 for the generic dataset. The balance parameter can indicate an acceptable tradeoff between the degradation of the performance of the computer program 211 for the generic dataset and the improvement of the performance of the computer program 211 for the dataset. In some examples the balance parameter can indicate values that can be accepted during the evaluation of the updated computer program 211. In some examples the balance parameter can indicate a level of impact on the performance of the updated computer program 211 for the at least part of the generic dataset. In some examples the balance parameter can indicate a level of performance of the updated computer program 211 for the at least part of the dataset that is used to evaluate the performance of the updated computer program.

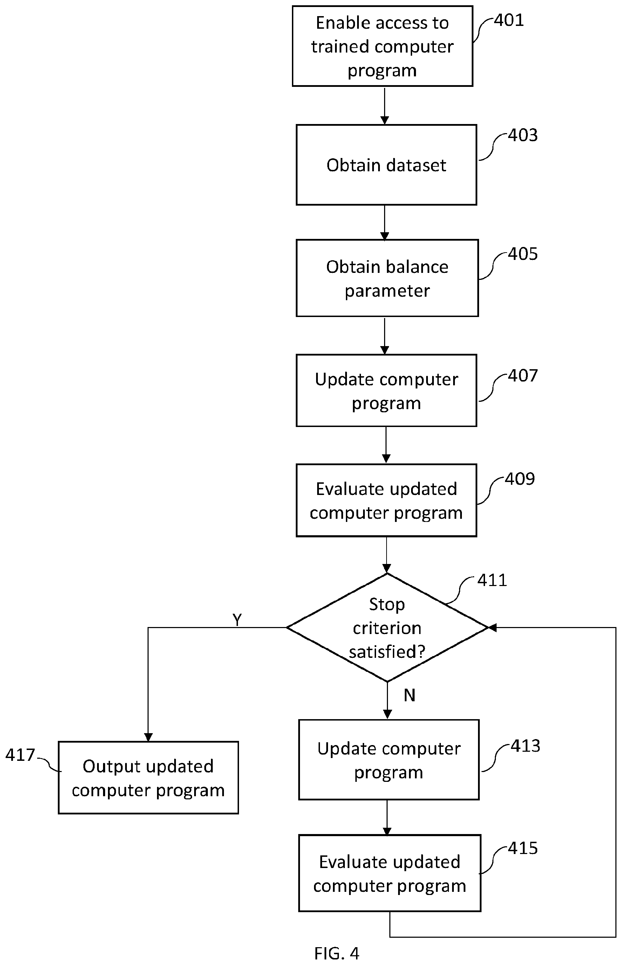

Fig. 4 shows another example method that can be used to update a computer program 211 in examples of the disclosure.

The method comprises, at block 401, enabling access to a trained computer program 211. In this example the computer program 211 is a Deep Neural Network (DNN) model. Other types of computer program 211 could be used in other examples.

The DNN can be obtained from a public resource such as the internet or from a third party or supplier. In some examples the DNN could be designed and trained specifically for use within a user device 103 or type of user device 103.

The DNN is trained based on a generic dataset. The generic dataset is large and encompasses a wide range of audio settings and audio scenarios. The generic dataset could be a publicly available dataset. The generic dataset can be denoted $S^g$.

The training of the DNN requires a large computational complexity. It can take multiples of days to train the DNN using a multi-core cloud server.

The trained DNN is therefore suitable for use for general use cases. The DNN is trained to perform a specific audio processing task for a large number of audio settings. The specific audio task can comprise enhancing the audibility of sounds within audio signals or any other task or combination of tasks. For example, the DNN could be trained to perform well at echo and/or noise suppression for a wide range of acoustic scenarios. The trained DNN can be denoted $W^g$.

At block 403 the method comprises obtaining a dataset. The dataset can be used for updating the DNN for use in specific target use cases. The purpose of the updating of the DNN is to improve the performance of the DNN for the target use cases while having a limited effect on the performance of the DNN in other general use cases.

The target use case could be a specific type of device that is to be used for recording or playback audio signals. For example, different types of smart phone can have different acoustic properties and so are considered to be different use cases. Examples of the disclosure can therefore enable the DNN to be updated for use in different types of devices. In some examples the target use case could be an audio scenario. The audio scenario could comprise the audio scene that being captured and played back. For instance, there may be example scenarios where a user wants to retain some of the background noise from the audio scene in the audio signals. As an example, a user could be at a karting track and might want to retain the background audio of the karts within the audio signal. Other types of target use case could be used in some examples.

The dataset can comprise a small dataset compared to the generic dataset. The dataset comprises input and outputs for the specific target use cases.

Any suitable means or processes can be used to obtain the dataset. In some examples the dataset can be obtained using real world measurements or simulations. The real-world measurements could be performed in a laboratory or any other suitable environment. The real-world measurements or the results of the simulations could be provided by a third party.

In an example where the target use case is a specific user device 103 the real-world measurements that are used for the dataset could comprise far-end and near-end audio measurements at the speaker and microphone of the specific user device 103. To obtain the audio measurements the user device 103 could be configured in different settings. The different settings could comprise, no movement of the user device 103, movement of the user device 103 (including the loudspeaker 107 and the microphone 105), movement of a near-end speaker in the room, opening of a door, different volume of the signals and any other suitable settings.

The dataset that is used for a target use case can be denoted $S^t$.

In examples of the disclosure the DNN can be updated so that excellent audio functionality performance is attained for the specific target use case while good audio functionality performance is maintained for the general use cases. At block 405 the method comprises defining a balance parameter. The balance parameter can be denoted $\alpha$. The purpose of the balance parameter is to control the balance between attaining excellent audio functionality performance for the specific target use case and maintaining good audio functionality performance for the general use cases. The balance parameter can therefore indicate an acceptable tradeoff between the degradation of the performance of the DNN for the generic dataset and the improvement of the performance of the DNN for the dataset. The balance parameter can be used to control a trade-off between generality and customization of the DNN.

Once the balance parameter has been obtained the DNN can be updated, at block 407, based on the dataset $\hat{W} \leftarrow W^g$. The DNN can be updated based on the dataset or at least part of the dataset.

At block 409 the method comprises evaluating the updated DNN. The updated DNN can be evaluated for both generality and customization. The generic dataset, or a part of the generic dataset can be used to evaluate the updated DNN for generality. This gives an indication of how the updated DNN performs for a range of general use cases. This gives a measure whether or not the good performance across the range of the generic dataset has been maintained.

The dataset, or a part of the dataset, can be used to evaluate the DNN for customization. This gives an indication of how the updated DNN performs for the specific target use cases. This gives a measure whether or not the excellent performance for the range of the dataset has been attained. The part of the dataset that is used to evaluate the updated DNN can be different to the part of the dataset that was used to train the updated DNN at bock 407.

At block 411 it is determined whether stop criterion is satisfied. The stop criterion can be levels of both customization performance and general performance that are to be satisfied. The stop criterion can be determined based on the balance parameter to control a trade-off between excellent performance for the target use case and a good performance for the general use cases.

If the stop criterion are not satisfied then the method proceeds to a while loop. If the stop criterion are not satisfied then the method proceeds to block 413. And the DNN is updated. The DNN can be updated based on the dataset. The update of the DNN can be a controlled step update.

The process of updating the DNN can comprise dividing the data set into a first subset and a second subset. The first subset can be used for training the DNN and the second subset can be used for evaluating the DNN. In some examples the first subset and the second subset can be disjoint. In some examples there can be some partial overlap between the first subset and the second subset. The two subsets can be different so that there can be at least one datapoint that is in one of the subsets but not in the other.

The updating of the DNN using the dataset has a low complexity because the dataset only has a small size. The updating of the DNN could take a few seconds or minutes. This is much less time than it takes to originally train the DNN using the large generic dataset which could be multiple days. Therefore, the updating of the DNN takes orders of magnitude less time than the original training of the DNN.

In examples of the disclosure the process of updating the DNN based on the dataset does not involve performing a training step or process using the generic database. This avoids the need to use large computational resources for the updates.

In some examples the controlled steps of the updates to the DNN can comprise algorithmic first-order updates related to gradients on at least part of dataset and optimized control of step sizes. If the step sizes are too large then the updates to the DNN could degrade the performance for the both general and specific use cases. Conversely if the step sizes are too small this might not result in a change of the DNN and this would require more iterations for the updates.

Once the DNN has been updated the method moves to block 415 and the updated DNN is evaluated. The updated DNN can be evaluated for both generality and customization. The evaluation can be performed by tracking the performance impact of the updated DNN on the generic dataset, and also on at least part of the dataset.

Any suitable means or process can be used to evaluate the updated DNN. In some examples the evaluation can comprise computing or tracking a performance loss for the updated DNN on the generic dataset. The tracking of this performance loss can be performed using inference and so involves a small complexity. The time taken for the computation of the performance loss could be in the range of several seconds of minutes.

The balance between the performance of the DNN on the general dataset and the performance of the DNN for the dataset can be controlled using the balance parameter. In some examples the balance parameter can comprise a numerical value. The numerical value can define a weighting between a generalization target and a customization target. In some examples the balance parameter can indicate a level for the weighting towards the customization. For example, the weighting could be indicated as low, medium, or high.

In some examples the balance parameter can be fixed. The fixed balance parameter can be set in the processes and systems used for the updating of the DNN. In some examples the balance parameter could be adjustable. The balance parameter could be adjusted by a user of a user device 103, a third party or any other suitable entity.

Any suitable parameters can be used to evaluate the performance of the DNN. In some examples the performance can be evaluated using a performance loss or cost. The performance loss could be analysed as a weighted balance between generalization and customization. Other parameters that could be used could be an Echo Return Loss Enhancement (ERLE), Perceptual Evaluation of Speech Quality (PESQ) or Short Time Objective Intelligibility (STOI) measure or any other suitable parameters.

After the updated DNN has been evaluated the method returns to bock 411 and it is determined whether or not the stop criterion is satisfied.

If the stop criterion is satisfied then the while loop is exited and the method proceeds to block 417. At block 417 the updated DNN is provided as an output. The updated DNN can then be used in systems such as the system shown in Fig. 2 to perform audio processing and any other suitable functions.

Fig. 5 is a plot of an example performance loss that shows the impact of updating a computer program 211 using examples of the disclosure.

In the plot of Fig. 5 the x-axis indicates the data domain of all possible use cases for which the computer program 211 has been trained to perform a respective audio processing function.

The data domain comprises the generic dataset 501. The generic dataset 501 encompasses a wide range of audio settings. The data domain also comprises a dataset 503. The dataset 503 encompasses a smaller range of audio settings than the generic dataset. The dataset 503 encompasses audio settings for a specific target use case. The dataset 503 might not be known when the DNN is trained using the generic dataset 501.

The y-axis indicates the performance of the DNN. The performance is measured as a performance loss or cost. Any suitable functions could be used to measure the performance loss. In this example the performance loss is a function that is to be minimized. Other parameters could be used to evaluate the DNN in other examples.

The first plot 505 shows the performance that is obtained when the DNN is trained using the generic dataset 501. In this example the performance is good across the range of the generic dataset. The performance is consistently good with no significant rises or drops in performance loss across the range of the generic dataset 501. The training using the generic dataset 501 therefore provides a high level of generalization and a low level of customization.

The second plot 507 shows the performance that could be obtained if the DNN is trained using the dataset 503 instead of the generic dataset 501. In this case the DNN would be optimized, or substantially optimized for the specific use case corresponding to the dataset 503. The plot 507 shows a much lower performance loss for the range of the target use case which indicates a considerably improved performance for the target use case. However outside of the target use case the plot 507 shows a much higher performance loss indicating a much worse performance. The training using the dataset 503 would therefore provide a high level of customization and a low level of generalization.

In examples of the disclosure subsets of the dataset 503 are obtained and used to train and update the DNN and to evaluate the DNN. In the example of Fig. 5 the subset comprises four points 509. Other numbers of data points 509 could be used in other examples. The subsets of the dataset 503 could be obtained using measurements, simulations or any other suitable means or processes.

In the example of Fig. 5 some of the datapoints 509 are labelled t. These datapoints can be used for training the pre-trained DNN. The pre-trained DNN is a DNN that has been trained using the generic dataset. The pre-trained DNN has not yet been updated using the dataset. A small number of datapoints can be used for this training so that it is not computationally complex or time intensive.

Similarly in Fig. 5 some of the datapoints 509 are labelled v. These datapoints can be used for evaluating or validating the updated DNN after it has been updated using the training datapoints or subset. The datapoints that are used for evaluating or validating the updated DNN can be different to the datapoints that are used for the training. In some examples the subset of datapoints used for training and the subset of datapoints used for evaluating the trained DNN can be disjoint. In other examples there could be some overlap between the respective subsets of datapoints.

Fig. 5 shows a third plot 511 which is the plot 511 that is obtained if the DNN is updated using the datapoints 509 according to examples of the disclosure. In this case the DNN has an improved performance for the specific use case but also retains a good general performance for the general use case. This would therefore provide a high level of customization and a good level of generalization.

In some examples the following algorithm could be used to update a computer program 211 such as a DNN.

In this example the following symbols are defined:

- $S^g$: generic dataset

  ∘ The generic dataset consists of multiple (for example, i=1... 1000000) input $\left(I_i^g\right)$ to output $\left(O_i^g\right)$ mappings:

$$S^g = \{i = 1 \ldots 100000 : \{I_i^g, O_i^g\}\}$$

°

- $S^t$: target usecase specific dataset, or just the dataset

  ○ $S^t = S^{t,train} \cup S^{t,val}$
  ○ $S^{t,train}$: training subset of $S^t$ ($S^{t,train} \subseteq S^t$), or the part of the dataset used for training the computer program

    ■ For example,

$$S^{t,train} = \{i = 1 \ldots 100 : \{I_i^{t,train}, O_i^{t,train}\}\}$$

  ○ $S^{t,val}$: validation subset of $S^t$ ($S^{tval} \subseteq S^t$), or the part of the dataset used for evaluating the performance of the updated computer program

    ■ For example,

$$S^{t,val} = \{i = 1 \ldots 100 : \{I_i^{t,train}, O_i^{t,train}\}\}$$

- $W^g$: DNN parameters or weights trained using generic dataset $S^g$
- $f(W, S)$: loss function evaluated on set S with DNN parameters W
- $\dfrac{d(f(W,S))}{dW}$ : gradient of loss function $f(W, S)$ wrt DNN parameters W evaluated on set S
- $\mu$: step size

Using these symbols an example algorithm that can be used to update a computer program 211 such as a DNN is:

1. Given a pretrained DNN model with parameters $W^g$ trained on generic dataset $S^g$
2. Initialize the DNN model parameters with that of the pretrained DNN model:

$\hat{W} \leftarrow W^g$, and init the balance parameter $\alpha$

3. Evaluate the initial cost function values: $f(\hat{W}, S^g)$, $f(\hat{W}, S^{t,train})$, $f(\hat{W}, S^{t,val})$
4. While stopcriterion on generalization vs customization balance is not satisfied

    i. $W \leftarrow \hat{W}$
    ii. Determine the step size $\mu$ for the current iteration

    iii. Determine the gradient $\dfrac{d(f(W,S^{t,train}))}{dW}$ for dataset $S^{t,train}$

    iv. Update the DNN model parameter weights:

$$\hat{W} \leftarrow W - \mu \frac{d(f(W,S^{t,train}))}{dW}$$

    v. Evaluate the cost function values on at least one of $f(\hat{W}, S^g)$, $f(\hat{W}, S^{t,val})$, $f(\hat{W}, S^{t,train})$

5. Output updated DNN model W with balanced generalization vs customization performance

Examples of stopcriterions that could be used at step 4 comprise:

- if the generalization loss $f(\hat{W}, S^g)$ impact is larger than 5%:

  ○ if $f(\hat{W}, S^g) > (1 + \alpha) \times f(W^g, S^g)$ with $\alpha = 0.05$

- if the generalization loss $f(\hat{W}, S^g)$ impact is larger than 10% or if the validation loss is minimized:
- if the generalization loss impact is larger than 10% or if the validation loss is minimized or if the training loss is minimized.
- If the weights of the pretrained DNN model have changed by a certain amount
- If the maximum number of iterations is larger than a threshold

Examples of the step size update used at step ii comprise:

- $\mu = c$ with c denoting a fixed constant
- $\mu = \dfrac{1}{iterations}$

- $\mu$ update satisfying the Wolfe conditions

As a gradient update formula that can used at step iv stochastic gradient algorithms can be used. Alternative first-order algorithms that could be used could be the Nesterov's accelerated gradient method.
Examples of the cost functions that could be used at step v when the DNN is used for residual echo and/or noise suppression comprise:

- Weighted sum of noise suppression and speech distortion or derivatives thereof.
- Mean squared error loss or derivatives thereof.
- ERLE
- STOI
- PESQ

In this example evaluation of the performance loss only involves DNN inference, and no training using the large generic dataset. This provides benefits because the DNN inference can be executed with low complexity even for the large general data base. Also it takes a short time to perform these evaluations. For example, it can take minutes or seconds to make the evaluations compared to the days it can take to originally train the DNN using the generic dataset.

Different options can be taken in step v, depending on the considered stop criterion:

- evaluate $f(\hat{W}, S^g)$
- evaluate $f(\hat{W}, S^g)$ and $f(\hat{W}, S^{t,val})$
- evaluate $f(\hat{W}, S^g)$ and $f(\hat{W}, S^{t,train})$
- evaluate $f(\hat{W}, S^{t,val})$ and $f(\hat{W}, S^{t,train})$
- evaluate $f(\hat{W}, S^{t,train})$
- evaluate $f(\hat{W}, S^{t,val})$

The respective datasets that are used for training and updating the DNN correspond to input-to-output mappings for different audio settings. For cases where the DNN is to be used for residual echo and/or noise suppression these inputs ($I^g$, $I^{t,train}$, $I^{t,val}$) can refer to one of or a combination of:

- WOLA domain frame of AEC filter outputs: such as, $\hat{Y}$ in **Error! Reference source not found.**

- WOLA domain frame of error signal outputs: such as, E in **Error! Reference source not found.**

- WOLA domain microphone signals: such as, D in **Error! Reference source not found.**

- WOLA domain far-end signals (= speaker signals), such as, X in **Error! Reference source not found.**

The outputs can refer to the:

- WOLA domain spectral gain coefficients according to a specified target use case: such as, G in **Error! Reference source not found.**

Any suitable architecture can be used for the computer program 211. Fig. 6 schematically shows an example computer program 211. In this example the computer program 211 is a machine learning model. In this example the machine learning model comprises a DNN 601. The DNN 601 comprises an input layer 603, an output layer 607, and a plurality of hidden input layers 605. The hidden input payers 605 are provided between the input layer 603 and the output layer 607. The example DNN 601 shown in Fig. 6 comprises two hidden input layers 605 but the DNN 601 could comprise any number of hidden input layers 605 in other examples.

Each of the layers within the DNN 601 comprise a plurality of nodes 609. The nodes 609 within the respective layers are connected together by a plurality of connections 611, or edges, as shown in Fig. 6. Each connection 611 represents a multiplication with a weight configuration. Within the nodes 609 of the hidden layers 605 and output layers 607 a nonlinear activation function is applied to obtain a multi-dimensional nonlinear mapping between the inputs and the outputs.

In examples of the disclosure the DNN 601 is trained or configured to map one or more input signals to a corresponding output signal. The input signals can comprise any suitable inputs such as the echo signals $\hat{Y}$, the far end signals X, the residual error signals E, or any other suitable input signals. The output signals could comprise gain coefficient G. The gain coefficients could comprise spectral gain coefficients or any other suitable type of gain coefficients.

Fig. 7 shows an architecture that can be used for example computer program 211. The example architecture shown in Fig. 7 could be used for user devices 103 comprising a single loudspeaker 107 and a single microphone 105 and using a WOLA based acoustic echo cancellation block 207 as shown in Fig. 2. The acoustic echo cancellation block 207 can be configured to cancel the echo from the near end signal. In this example the acoustic echo cancellation block 207 can comprise WOLA based acoustic echo cancellation with a frame size of 240 samples and an oversampling factor of 3 with a 16 kHz sampling rate. Other configurations for the acoustic echo cancellation block, and/or other types of audio signaling processing, can be used in other examples of the disclosure.

In this example the computer program 211 comprises a DNN. Other architectures for the computer program 211 could be used in other implementations of the disclosure.

In this example the output of the acoustic echo cancellation process is a residual error signal E. This can be a residual error signal E as shown in Fig. 2. The residual error signal E comprises STFT domain frames in 121 (=240/2+1) frequency bands. In this example only the first half of the spectrum is considered because the second half of the spectrum is the conjugate of the first half. Each of the frames in the residual error signal E are transformed to logarithmic powers and standardized before being provided as a first input 701A to the computer program 211.

The computer program 211 also receives a second input 701B based on the echo signal $\hat{Y}$. The second input 701B also comprises STFT domain frames in the same 121 frequency bands as used for the residual error signal E. The echo signal $\hat{Y}$ can also be transformed to logarithmic powers and standardized before being provided as the second input 701B to the computer program 211.

In the example of Fig. 7 computer program 211 also receives a third input 701C based on the far end or loudspeaker signal X. The third input 701C also comprises STFT domain frames in the same 121 frequency bands as used for the residual error signal E. The far end or loudspeaker signal X can also be transformed to logarithmic powers and standardized before being provided as the third input 7013C to the computer program 211.

Different input signals could be used in different examples of the disclosure. For instance, in some examples the third input 701C based on the far end or loudspeaker signal *X* might not be used. In other examples the second input 701B based on the echo signal $\hat{Y}$ and the third input 701C based on the far end or loudspeaker signal *X* might not be used. In other examples one or more of the respective input signals could be based on different information or data sets.

The standardized input signals as shown in Fig. 7 therefore comprise 363 input features. The 363 input features are passed through a first one dimensional convolutional layer 703 and second one dimensional convolutional layer 705. Each of the convolutional layers 703, 705 provide 363 outputs over the range of frequency bands. The first convolutional layer 703 has a kernel size of five and the second convolutional layer 705 has a kernel size of 3. Each of the convolutional layers 703, 705 has a stride of one. Other configurations for the convolutional layers could be used in other examples.

The convolutional layers 703, 705 are followed by four consecutive gated recurrent unit (GRU) layers 707, 709, 711, 713. Each of the GRU layers 707,709, 711, 713 in this example provide 363 outputs.

The outputs of each of the GRU layers 707, 709, 711, 713 and the second convolutional layer 705 are provided as inputs to a dense output layer 715. The dense output layer 715 uses a sigmoid activation function to generate the two outputs 717, 719 of the computer program 211. In this example each of the outputs 717, 719 can comprise 121 values, with a value between zero and one. In other examples the computer program 211 could provide one or more outputs.

Any suitable process can be used to initially train or configure the computer program 211 using the generic dataset. The generic dataset can comprise mappings of input data values to optimal outputs for a wide range of use cases. The generic dataset could comprise a synthetic loudspeaker and microphone signals, and synthetic room impulse responses (RIRs). In some examples the generic dataset could comprise any available database of loudspeaker and microphone signals.

To initially train the generic dataset optimal or target gain coefficients are defined. Any suitable process or method can be used to define the optimal or target gain coefficients such as the ideal binary mask (IBM), the ideal ratio mask (IRM), the phase sensitive filter, the ideal amplitude mask or any other suitable process or method. These processes or methods are formulas that depend on perfect knowledge of the speech and noise or other wanted sounds. This perfect knowledge should be made available for the generic dataset that is used to train the computer program 211. This enables the optimal or target gain coefficients that should be predicted by the computer program 211 to be computed. For example, the optimal or target gain coefficients $G_{opt}(k, f)$ that should be predicted by the computer program 211 could be computed as:

$$G_{opt}(k,f) = \frac{|S(k,f)|}{|E(k,f)|},$$

where *f* denotes the frame index, *k* denotes the frequency band index, *S*(*k, f*) denotes the actual (complex-valued) speech that should remain after the noise suppression and removal of residual echo and *E*(*k, f*) denotes the residual error signal or a near end signal (or noisy speech signal) comprising the unwanted noise and residual echo.

The optimal or target gain coefficients $G_{opt}(k, f)$ usually have a value between zero and one.

In cases where the target gain coefficients $G_{opt}(k, f)$ are predicted perfectly by the computer program the target gain coefficients $G_{opt}(k, f)$ can be applied to the residual error signal $E(k, f)$ to provide a signal that has the same magnitude as the speech, but a different phase. That is,

$$G_{opt}(k,f)E(k,f) = |S(k,f)|\varphi(E(k,f))$$

Where $\varphi$ denotes the phase of the complex number. It can be assumed that the phase distortion is not perceived by a human listener in a significant manner. In cases, where the target gain coefficients $G_{opt}(k, f)$ are predicted imperfectly, the speech magnitudes are approximated.

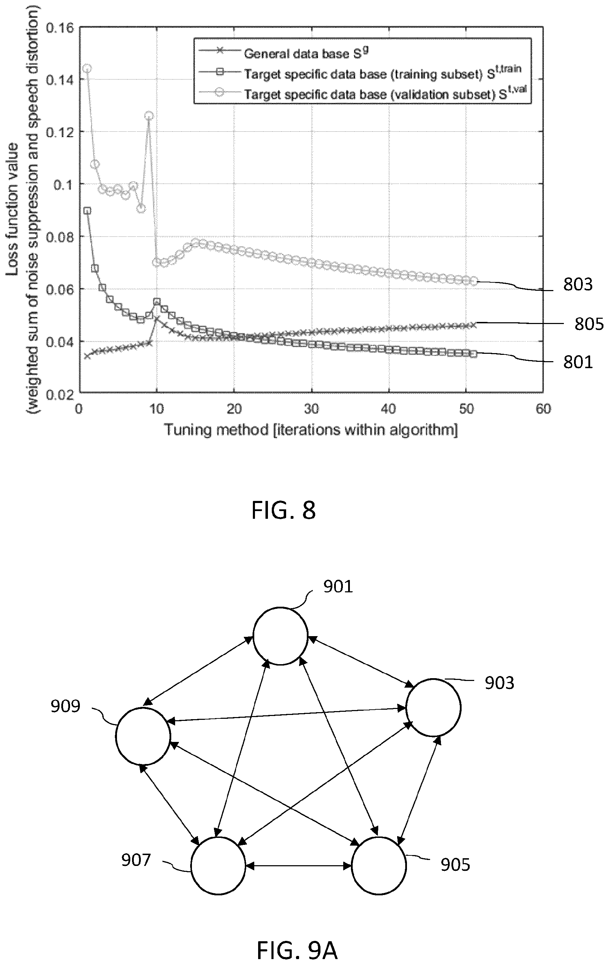

Fig. 8 shows plot of results that were obtained using the example architecture shown in Fig. 7 for the purposes of residual echo and noise suppression.

To obtain the results shown Fig. 8 the ICASSP AEC challenge 2022 data base was used as the generic dataset S$^g$. The pretrained DNN model was computed on a Nokia Cloud Server (NESC) with 44 cores. The target use case was a smartphone from a specific smartphone manufacturer. The dataset for this target use case was obtained by collecting a range of audio captures in a laboratory. The audio captures comprises both far-end signals and near-end signals. The small dataset was divided into a training subset S$^{t,train}$ and a validation subset S$^{t,val}$.

The trained DNN model was updated using the algorithm described above and with balance parameter $\alpha$=0.33 and with:

   ◦ Stopcriterion: if f($\hat{W}$, S$^g$) > (1 + $\alpha$) × f(W$^g$, S$^g$) with $\alpha$ = 0.33
   ◦ Stochastic gradient updates
   ◦ Fixed stepsize

In the plot of Fig. 8 the x-axis denotes the number of while loop iterations and the y-axis denotes a value of a performance loss. The performance loss function used in this case was a weighted sum of noise suppression and speech preservation. Speech preservation is inversely proportional to speech distortion.

The first plot 801 in Fig. 8 shows the loss function of the training subset of the dataset for the target specific use case. This plot shows that the loss function is improved as the number of iterations of the while loop increases. This would be expected because the training subset is used to compute the gradient updates. The first plot shows 801 a small increase around iteration numbers 9 and 10 which is due to the step size selection. This increase could be avoided by improving the procedure for selecting the step size.

The first plot 803 in Fig. 8 shows the loss function of the validation subset of the dataset for the target specific use case. This second plot also shows that the loss function is improved as the number of iterations of the while loop increases. This implies that the DNN is tuned towards improved performance for the target use case.

The third plot 805 in Fig. 8 shows the loss function of the generic dataset. This shows an increase in the loss function as the number of iterations of the while loop increases however the increase is small compared to the improvements made for the target use case.

Therefore, the results show that the examples of the disclosure can be used to improve the performance of the DNN for a target use case from good to excellent while maintaining a good overall performance for the general use cases.

Figs. 9A to 9J show example system architectures. Different entities can perform or implement different parts of the disclosure. Fig. 9A schematically shows respective tasks relating to the implementation of the disclosure.

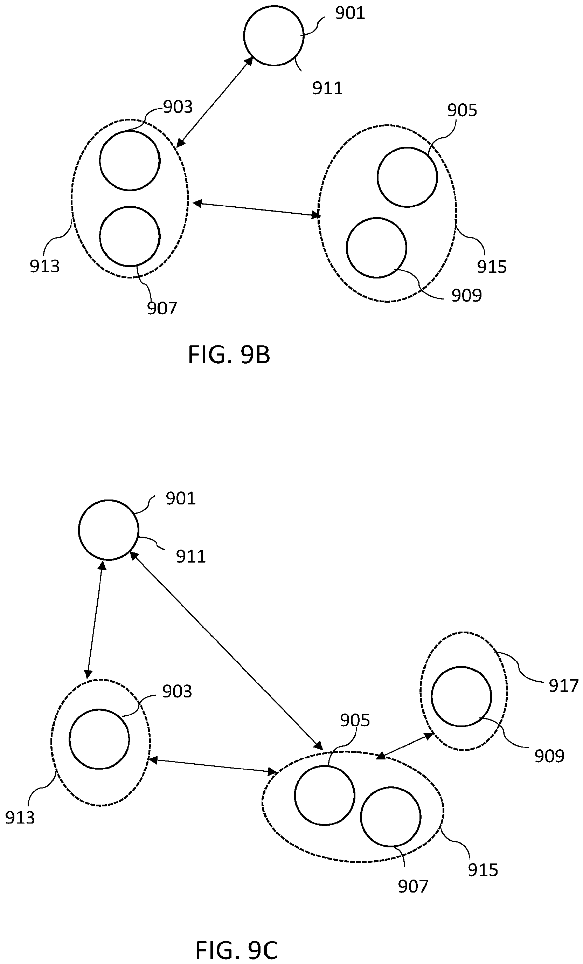

In Fig. 9A block 901 represents construction of the generic dataset, block 903 represents training of the computer program 211, block 905 represents construction of the dataset for a target use case, block 907 represents the updating of the computer program 211 using the methods and algorithms described herein and block 909 represents the deployment of the computer program 211 after it has been updated for the target use case. These respective tasks can be performed by different entities or combinations of entities. Figs. 9B to 9J show examples of how these respective tasks could be distributed between different entities or combinations of entities.

In the example of Fig. 9B the task 901 of construction of the generic dataset is performed by a first entity 911. The first entity 911 makes the generic dataset available in a public domain. This dataset is freely available for other parties to use. A second entity 913 performs the task 903 of training the computer program 211 and the task 907 of updating the computer program 211. The second entity 913 could be a commercial entity. The second entity 913 could be a software provider. A third entity 915 performs the task 905 of constructing the dataset for the target use case and the task 909 of deploying the updated computer program 211. The third entity 915 can be a commercial provider. The third entity 915 can be a hardware provider. The third entity 915 can be different to the second entity 913.

In the example of Fig. 9C the task 901 of construction of the generic dataset is performed by a first entity 911. As in the previous example, the first entity 911 makes the generic dataset available in a public domain. This dataset is freely available for other parties to use. A second entity 913 performs the task 903 of training the computer program 211. The second entity 913 could be a commercial entity. The second entity 913 could be a software provider or any other suitable type of commercial entity. A third entity 915 performs the task 905 of constructing the dataset for the target use case and the task 907 of updating the computer program 211. The third entity 915 can be a commercial provider. The third entity 915 can be a hardware provider. The third entity 915 can be different to the second entity 913. In the example of Fig. 9C a fourth entity 917 performs the task 909 of deploying the updated computer program 211. The fourth entity 917 could be a user device 103 such as the devices shown in Fig. 1 or any other suitable type of device.

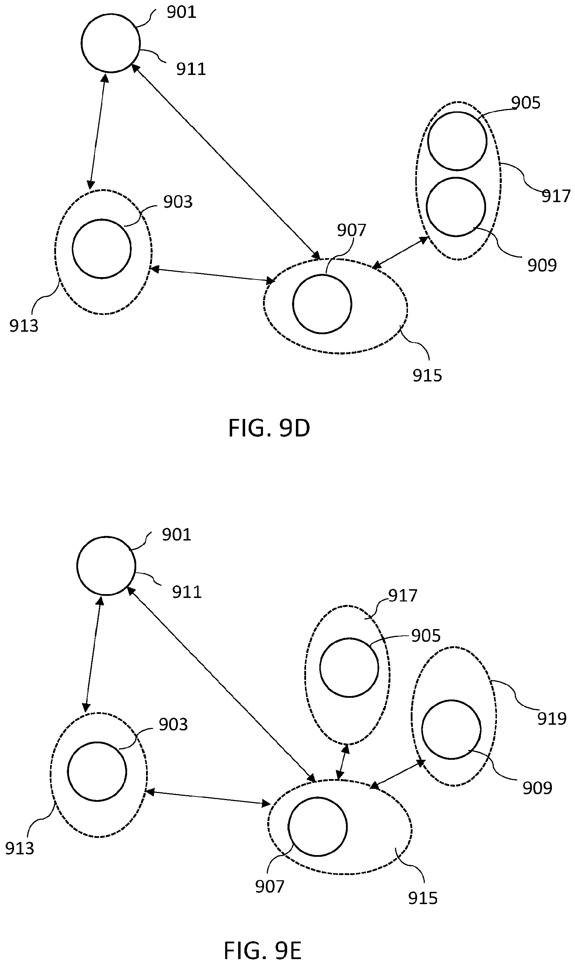

In the example of Fig. 9D the task 901 of construction of the generic dataset is performed by a first entity 911. As in the previous examples, the first entity 911 makes the generic dataset available in a public domain. This dataset is freely available for other parties to use. A second entity 913 performs the task 903 of training the computer program 211. The second entity 913 could be a commercial entity. The second entity 913 could be a software provider or any other suitable type of commercial entity. A third entity 915 performs the task 907 of updating the computer program 211. The third entity 915 can be a commercial provider. The third entity 915 can be a hardware provider. The third entity 915 can be different to the second entity 913. In the example of Fig. 9D a fourth entity 917 performs the task 905 of constructing the dataset for the target use case and also the task 909 of deploying the updated computer program 211. The fourth entity 917 could be a user device 103 such as the devices shown in Fig. 1 or any other suitable type of device. The dataset for the target use case could be constructed by running an application that captures signals from the microphone 105 and loudspeaker 107 in certain settings. This dataset can then be sent back to the third entity 915 to enable the computer program 211 to be updated.

In the example of Fig. 9E the task 901 of construction of the generic dataset is performed by a first entity 911. As in the previous examples, the first entity 911 makes the generic dataset available in a public domain. This dataset is freely available for other parties to use. A second entity 913 performs the task 903 of training the computer program 211. The second entity 913 could be a commercial entity. The second entity 913 could be a software provider or any other suitable type of commercial entity. A third entity 915 performs the task 907 of updating the computer program 211. The third entity 915 can be a commercial provider. The third entity 915 can be a hardware provider. The third entity 915 can be different to the second entity 913. In the example of Fig. 9E a fourth entity 917 performs the task 905 of constructing the dataset for the target use case. The fourth entity 917 in this example could be another commercial entity. This dataset can then be sent back to the third entity 915 to enable the computer program 211 to be updated. In the example of Fig. 9E a fifth entity 919 performs the task 909 of deploying the updated computer program 211. The fifth entity 919 could be a user device 103 such as the devices shown in Fig. 1 or any other suitable type of device.

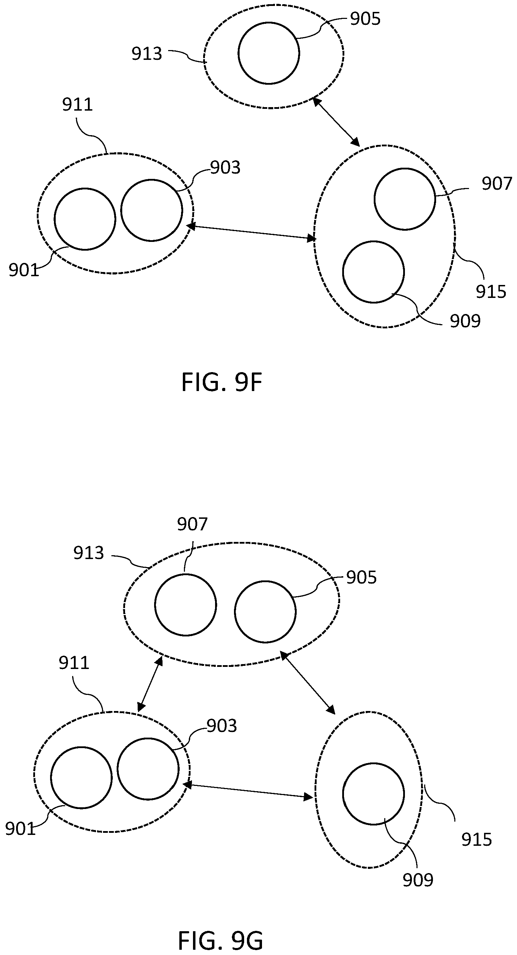

In the example of Fig. 9F the task 901 of construction of the generic dataset and the task 903 of training the computer program 211 are performed by a first entity 911. The first entity 911 in this example can be a commercial entity. In this example the first entity 911 does not need to make the generic dataset freely available but can make the trained computer program 211 available to appropriate entities. In this example a second entity 913 performs the task 905 of constructing the dataset for the target use case. The second entity 913 in this example can be another commercial entity. This can be a different entity to the first entity. In this example a third entity 915 performs the task 907 of updating the computer program 211. To enable the third entity 915 to update the computer program 211 the third entity 915 can access the generic dataset and the target dataset. In this example the third entity 915 also performs the task 909 of deploying the updated computer program 211. In this example the third entity 915 could be a user device 103 such as the devices shown in Fig. 1 or any other suitable type of device.

In the example of Fig. 9G the task 901 of construction of the generic dataset and the task 903 of training the computer program 211 are performed by a first entity 911. The first entity 911 in this example can be a commercial entity. In this example the first entity 911 does not need to make the generic dataset freely available but can make the trained computer program 211 available to appropriate entities. In this example a second entity 913 performs the task 905 of constructing the dataset for the target use case and also the task 907 of updating the computer program 211. To enable the second entity 913 to update the computer program 211 the second entity 913 can access the generic dataset. In this example a third entity 915 performs the task 909 of deploying the updated computer program 211. In this example the third entity 915 could be a user device 103 such as the devices shown in Fig. 1 or any other suitable type of device.

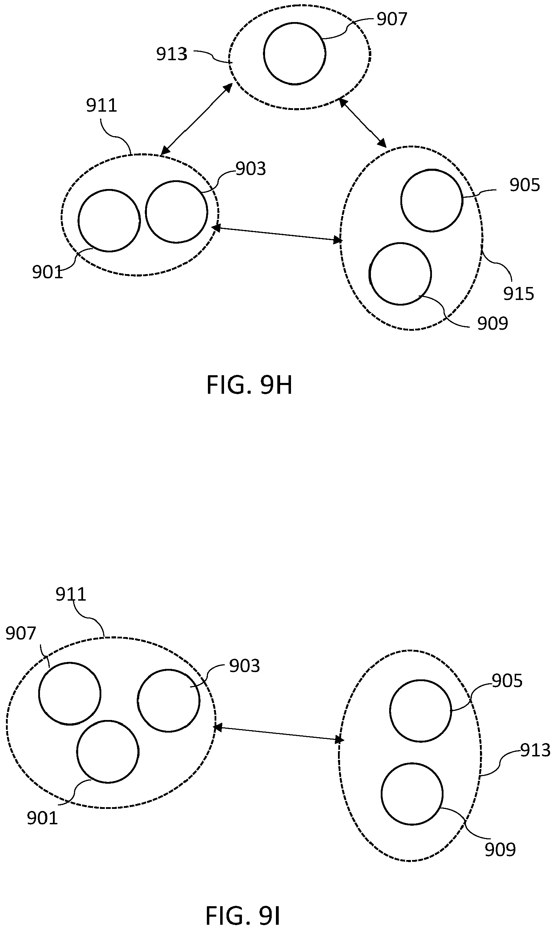

In the example of Fig. 9H the task 901 of construction of the generic dataset and the task 903 of training the computer program 211 are performed by a first entity 911. The first entity 911 in this example can be a commercial entity. In this example the first entity 911 does not need to make the generic dataset freely available but can make the trained computer program 211 available to appropriate entities. In this example a second entity 913 performs the task 907 of updating the computer program 211. In this example a third entity 915 performs the task 905 of constructing the dataset for the target use case and also the task 909 of deploying the updated computer program 211. In this example the third entity 915 could be a user device 103 such as the devices shown in Fig. 1 or any other suitable type of device. In order to enable the second entity 913 to perform the updating of the computer program 211 the second entity 913 can access the generic dataset and the dataset for the target use case.

In the example of Fig. 9I the task 901 of construction of the generic dataset and the task 903 of training the computer program 211 and the task 907 of updating the computer program 211 are performed by a first entity 911. The first entity 911 in this example can be a commercial entity. In this example the first entity 911 does not need to make the generic dataset freely available but can make the trained computer program 211 and the updated computer program 211 available to appropriate entities. In this example a second entity 913 performs the task 905 of constructing the dataset for the target use case and also the task 909 of deploying the updated computer program 211. In this example the second entity 913 in this case could be a user device 103 such as the devices shown in Fig. 1 or any other suitable type of device. In order to enable the first entity 911 to perform the updating of the computer program 211 the second entity 913 can provide the dataset for the target use case to the first entity 911.

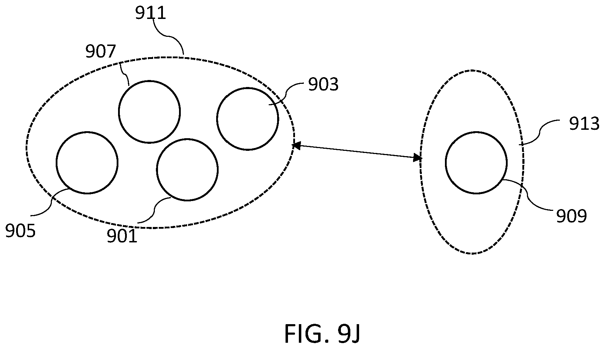

In the example of Fig. 9J all of the tasks except for the deployment of the updated computer program 211 are performed by the first entity 911. In this example the first entity 911 performs the task of construction of the generic dataset, the task 903 of training the computer program 211, the task 905 of constructing the dataset for the target use case, and the task 907 of updating the computer program 211. The second entity 913 can be a user device 103 such as the devices shown in Fig. 1 or any other suitable type of device. The second entity 913 can access the updated computer program and perform the task 909 of deploying the updated computer program 211.

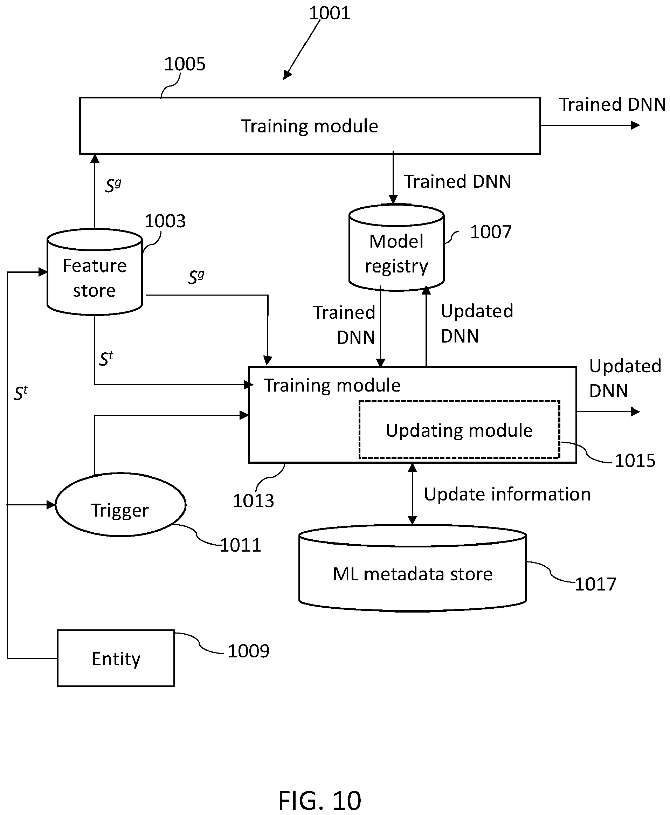

Fig. 10 schematically shows an example Machine Learning Operations (MLOps) pipeline 1001 that can be used in some examples of the disclosure. Variations to this pipeline 1001 and different pipelines could be used in some examples.

The pipeline 1001 comprises a feature store 1003. The feature store 1003 comprises a central repository. The datasets that are to be used to implement examples of the disclosure can be stored in the feature store 1003. In examples of the disclosure the feature store 1003 can be configured to store the generic dataset and also the datasets that can be used for the updates to the computer programs 211.

The generic dataset $S^g$ can be retrieved from the feature store 1003 and provided to a training module 1005. The training module 1005 is configured to use the generic dataset $S^g$ to train a computer program 211 such as a DNN. The trained computer program 211 can provide a good performance across the use cases covered by the generic dataset $S^g$.

The training module 1005 can perform any suitable processes that are used to train the machine learning model. For instance, the training module 1005 can be configured to perform data validation for the input generic dataset $S^g$, data preparation, training of a machine learning model, evaluation of the machine learning model and validation of the machine learning model. Other processes or combinations of processes could be used in other examples.

The training module 1005 provides a trained machine learning model as an output. In this example the trained machine learning model is a trained DNN. Other types of machine learning model could be used in other examples. The trained machine learning model provides a good performance across a range of use cases and can be deployed by appropriate devices.

The trained machine learning model can also be stored in a model registry 1007. The model registry 1007 comprises a central repository for pre-trained machine learning models. In some examples updated machine learning models could also be stored in the model registry 1007.

An external entity 1009 can be configured to trigger the pipeline 1001. The external entity 1009 could be a user device as shown in Fig. 1 or any other suitable device. The external entity can cause the trigger when the dataset $S^t$ for a target use case becomes available or in response to any other suitable event. The dataset $S^t$ for a target use case could become available due to measurements being made, changes in software, an input by an end-user, a request by an end-user device, a request by an end user application, an expiry of a time period relating to the trained computer program, an output of a similarity evaluation between the generic dataset and the dataset or due to any other suitable event.

In the example of Fig. 10 the entity 1009 causes the trigger of the pipeline 1001 by providing the dataset $S^t$ for a target use case. The dataset $S^t$ for a target use case is provided from the entity 1009 to the feature store 1003.

The dataset $S^t$ for a target use case, or other suitable input, can also be provided from the entity 1009 to a trigger module 1011. The trigger module 1011 can then provide an input to a second training module 1013 to start the updating of the trained machine learning model.

The second training module 1013 can be configured to perform further training of the trained machine learning model. In the example of Fig. 10 the second training module 1013 comprises an updating module 1015 that can be configured to update the trained machine learning model using the examples described herein. For example, the methods and algorithms described above, or variations of these, could be implemented by the updating module 1015.

To enable the updating of the machine learning model the second training module 1013 is configured to retrieve the generic dataset $S^g$ and the dataset $S^t$ for a target use case from the feature store 1003 and retrieve the trained machine learning model from the model registry 1007.

Once the updating of the machine learning model has been completed an updated machine learning model is provided as an output. In this example the updated machine learning model is an updated DNN. Other types of machine learning model could be used in other examples. The updated machine learning model provides excellent performance for the target use case but still provides good performance across a range of use cases and can be deployed by appropriate devices.

The updated machine learning model can also be stored in the model registry 1007.

In some examples information relating to the updating of the machine learning model can be provided to a machine learning metadata store 1017. This information can then be retrieved and used by the updating module 1015 at an appropriate point.

The processes performed by the pipeline 1001 can be performed once or can be performed multiple times. If the processes are performed multiple time this can be for the same target datasets or for different target use case dataset.

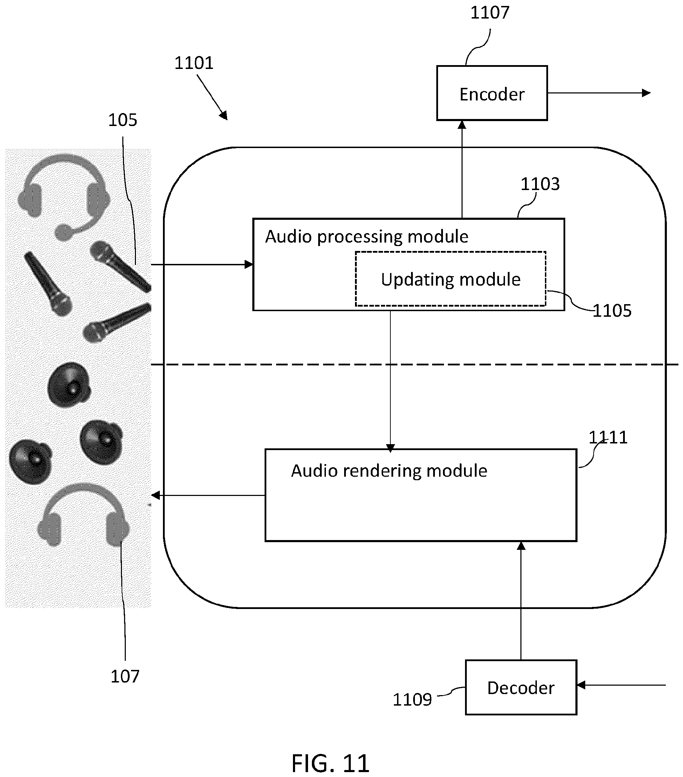

Fig. 11 schematically shows another example system 1101 that could be used to implement examples of the disclosure. The system 1101 shown in Fig. 11 can be used for voice or other types of audio communications.

The system 1101 comprises one or more microphones 105 and one or more loudspeakers 107. The microphones 105 are configured to detect acoustic signals and convert acoustic signals into output electrical audio signals. The loudspeakers 107 are configured to convert an input electrical signal to an output acoustic signal that a user can hear. The microphones 105 and loudspeakers 107 can be parts of different devices. This can enable a first user to capture audio that can then be sent to a different user or a different user device. In some examples the microphones 105 and loudspeakers 107 can be parts of the same device. This can enable a first user to capture audio and then play it back using the same device.

The system 1101 comprises an audio processing module 1103. The system 1101 is configured so that audio signals captured by the microphones 105 are provided to the audio processing module 1103. The audio processing module can be configured to perform any suitable audio processing on the audio signals. The audio processing that is performed can be configured to improve the quality or intelligibility or the audio signals or for any other suitable purpose. In some examples the audio processing could comprise residual echo or noise suppression. Other types of audio processing could be used in other examples.

In examples of the disclosure the audio processing module 1103 can be configured to use a computer program 211 such as a machine learning model to perform at least part of the audio processing. In examples of the disclosure the audio processing module can comprise an updating module 1105. The updating module 1105 could be configured to update the computer program 211 to a target use case. In some examples the updating modules 1105 could be configured to enable deployment of the updated computer program 211 for the target used case, for example the computer program 211 could be updated by a different entity but can be accessed by the updating module 1105.

The system 1101 is configured so that the audio signals that have been processed can be provided to an encoder 1107 where they can be encoded into a suitable format for transmission.

The system 1101 can also be configured to provide the processed audio signals to an audio rendering module 1111. The audio rendering module 111 can be configured to render the audio signals for playback by one or more loudspeakers. In some examples the system 1101 comprises a decoder 1109 so that received encoded signals can be decoded and provided to the audio rendering module.

Fig. 12 schematically illustrates an apparatus 1201 that can be used to implement examples of the disclosure. In this example the apparatus 1201 comprises a controller 1203. The controller 1203 can be a chip or a chip-set. In some examples the controller can be provided within a user device 103 such as the user devices 103 shown in Fig. 1.

In the example of Fig. 12 the implementation of the controller 1203 can be as controller circuitry. In some examples the controller 1203 can be implemented in hardware alone, have certain aspects in software including firmware alone or can be a combination of hardware and software (including firmware).

As illustrated in Fig. 12 the controller 1203 can be implemented using instructions that enable hardware functionality, for example, by using executable instructions of a computer program 1209 in a general-purpose or special-purpose processor 1205 that can be stored on a computer readable storage medium (disk, memory etc.) to be executed by such a processor 1205.

The processor 1205 is configured to read from and write to the memory 1207. The processor 1205 can also comprise an output interface via which data and/or commands are output by the processor 1205 and an input interface via which data and/or commands are input to the processor 1205.

The memory 1207 is configured to store a computer program 1209 comprising computer program instructions (computer program code 1211) that controls the operation of the controller 1203 when loaded into the processor 1205. The computer program instructions, of the computer program 1209, provide the logic and routines that enables the controller 1203 to perform the methods illustrated in Figs. 3 and 4 The processor 1205 by reading the memory 1207 is able to load and execute the computer program 1209.

The apparatus 1201 therefore comprises: at least one processor 1205; and at least one memory 1207 including computer program code 1211, the at least one memory 1207 and the computer program code 1211 configured to, with the at least one processor 1205, cause the apparatus 1201 at least to perform:

enabling 301 access to a trained computer program wherein the trained computer program is configured for processing one or more audio signals to enhance audibility of sounds within the one or more audio signals and wherein the trained computer program is trained using a generic dataset;
obtaining 303 a dataset wherein the dataset comprises data samples with inputs and outputs for the computer program; and
updating 305 the trained computer program for processing one or more audio signals to enhance audibility of sounds within the one or more audio signals using the dataset wherein the updating of the trained computer program comprises training the computer program using at least part of the dataset and evaluating the performance of the updated computer program for at least part of the dataset and for at least part of the generic dataset.

As illustrated in Fig. 12 the computer program 1209 can arrive at the controller 1203 via any suitable delivery mechanism 1213. The delivery mechanism 1213 can be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 1209. The delivery mechanism can be a signal configured to reliably transfer the computer program 1209. The controller 1203 can propagate or transmit the computer program 1209 as a computer data signal. In some examples the computer program 1209 can be transmitted to the controller 1203 using a wireless protocol such as Bluetooth, Bluetooth Low Energy, Bluetooth Smart, 6LoWPan (IP$_v$6 over low power personal area networks) ZigBee, ANT+, near field communication (NFC), Radio frequency identification, wireless local area network (wireless LAN) or any other suitable protocol.

The computer program 1209 comprises computer program instructions that when executed by an apparatus 1201 cause the apparatus 1201 to perform at least the following:

enabling 301 access to a trained computer program wherein the trained computer program is configured for processing one or more audio signals to enhance audibility of sounds within the one or more audio signals and wherein the trained computer program is trained using a generic dataset;

obtaining 303 a dataset wherein the dataset comprises data samples with inputs and outputs for the computer program; and

updating 305 the trained computer program for processing one or more audio signals to enhance audibility of sounds within the one or more audio signals using the dataset wherein the updating of the trained computer program comprises training the computer program using at least part of the dataset and evaluating the performance of the updated computer program for at least part of the dataset and for at least part of the generic dataset.

The computer program instructions can be comprised in a computer program 1209, a non-transitory computer readable medium, a computer program product, a machine readable medium. In some but not necessarily all examples, the computer program instructions can be distributed over more than one computer program 1209.

Although the memory 1207 is illustrated as a single component/circuitry it can be implemented as one or more separate components/circuitry some or all of which can be integrated/removable and/or can provide permanent/semi-permanent/ dynamic/cached storage.

Although the processor 1205 is illustrated as a single component/circuitry it can be implemented as one or more separate components/circuitry some or all of which can be integrated/removable. The processor 1205 can be a single core or multi-core processor.

References to "computer-readable storage medium", "computer program product", "tangibly embodied computer program" etc. or a "controller", "computer", "processor" etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term "circuitry" can refer to one or more or all of the following:

(a) hardware-only circuitry implementations (such as implementations in only analog and/or digital circuitry) and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions and

(c) hardware circuit(s) and or processor(s), such as a microprocessor(s) or a portion of a microprocessor(s), that requires software (e.g. firmware) for operation, but the software can not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The apparatus 1201 as shown in Fig. 12 can be provided within any suitable device. In some examples the apparatus 1201 can be provided within an electronic device such as a mobile telephone, a teleconferencing device, a camera, a computing device or any other suitable device.

The blocks illustrated in Figs. 3 and 4 can represent steps in a method and/or sections of code in the computer program 1209. The illustration of a particular order to the blocks does not necessarily imply that there is a required or preferred order for the blocks and the order and arrangement of the blocks can be varied. Furthermore, it can be possible for some blocks to be omitted.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

**Claims**

1. An apparatus comprising means for:

   enabling access to a trained computer program wherein the trained computer program is configured for processing one or more audio signals to enhance audibility of sounds within the one or more audio signals and wherein the trained computer program is trained using a generic dataset;
   obtaining a dataset wherein the dataset comprises data samples with inputs and outputs for the trained computer program; and
   updating the trained computer program for processing one or more audio signals to enhance audibility of sounds within the one or more audio signals using the dataset wherein the updating of the trained computer program comprises training the computer program using at least part of the dataset and evaluating the performance of the updated computer program for at least part of the dataset and for at least part of the generic dataset.

2. An apparatus as claimed in claim 1, wherein the dataset comprises at least one of:

   at least a subset of data that is not comprised within the generic dataset; and
   no data that is comprised within the generic dataset.

3. An apparatus as claimed in any preceding claim, wherein the obtaining of the dataset is triggered by one or more of; an input by an end-user, a request by an end-user device, a request by an end-user application, an expiry of a time period relating to the trained computer program, an output of a similarity evaluation between the generic dataset and the dataset

4. An apparatus as claimed in any preceding claim, wherein the dataset is obtained using one or more of: real world measurements; and simulators.

5. An apparatus as claimed in any preceding claim, wherein the updating of the trained computer program using the dataset comprises training the computer program using a first subset of the dataset and evaluating the performance of the updated computer program using a second subset of the dataset, where the data of the first subset and the second subset are disjoint.

6. An apparatus as claimed in any of claims 1 to 4, wherein the updating of the trained computer program using the dataset comprises training the computer program using a first subset of the dataset and evaluating the performance of the updated computer program using a second subset of the dataset, where the data of the first subset and the second subset are at least partly overlapping

7. An apparatus as claimed in any preceding claim, wherein the updating of the trained computer program comprises an iterative process wherein respective iterations comprise evaluating the performance of the updated computer program for the at least part of the dataset and for the at least part of the generic dataset.

8. An apparatus as claimed in any preceding claim, wherein the means are for evaluating the performance of the updated computer program for the at least part of the generic dataset by tracking a performance loss.

9. An apparatus as claimed in claim 8, wherein the tracking of the performance loss comprises using inference of the updated computer program.

10. An apparatus as claimed in any preceding claim, wherein the means are for obtaining a balance parameter wherein the balance parameter indicates a level of impact on the performance of the updated computer program for the at least part of the generic dataset.

11. An apparatus as claimed in claim 10, wherein the balance parameter indicates a level of performance of the updated computer program for the at least part of the dataset that is used to evaluate the performance of the updated computer program.

12. An apparatus as claimed in any preceding claim, wherein the processing of the one or more audio signals comprises at least one of: acoustic echo cancellation; noise suppression; residual echo suppression; speech enhancement; speech dereverberation; wind noise reduction; and sound source separation.

13. An apparatus as claimed in any preceding claim, wherein the computer program comprises a machine learning model.

14. An apparatus as claimed in claim 13, wherein the machine learning model comprises a neural network circuit.

15. A method comprising:

   enabling access to a trained computer program wherein the trained computer program is configured for processing one or more audio signals to enhance audibility of sounds within the one or more audio signals and wherein the trained computer program is trained using a generic dataset;
   obtaining a dataset wherein the dataset comprises data samples with inputs and outputs for the computer program; and
   updating the trained computer program for processing one or more audio signals to enhance audibility of sounds within the one or more audio signals using the dataset wherein the updating of the trained computer program comprises training the computer program using at least part of the dataset and evaluating the performance of the updated computer program for at least part of the dataset and for at least part of the generic dataset.

FIG. 1

FIG. 2

FIG. 3

Enable access to trained computer program ⌐401

Obtain dataset ⌐403

Obtain balance parameter ⌐405

Update computer program ⌐407

Evaluate updated computer program ⌐409

Stop criterion satisfied? ⌐411

Y

N

417⌐ Output updated computer program

Update computer program ⌐413

Evaluate updated computer program ⌐415

FIG. 4

FIG. 5

FIG. 6

FIG. 7

FIG. 8

FIG. 9A

FIG. 9B

FIG. 9C

FIG. 9D

FIG. 9E

FIG. 9F

FIG. 9G

FIG. 9H

FIG. 9I

FIG. 9J

FIG. 10

FIG. 11

1201

1213

CONTROLLER 1203

PROCESSOR 1205

MEMORY 1207

COMPUTER PROGRAM 1209

1211

COMPUTER PROGRAM CODE

FIG. 12

**EUROPEAN SEARCH REPORT**

Europäisches
Patentamt
European
Patent Office
Office européen
des brevets

Application Number

EP 23 19 6771

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/043712 A1 (SONANTIC LTD [GB]) 3 March 2022 (2022-03-03) | 1,3-11, 13,14 | INV. G10L21/0208 G06N3/08 |
| Y | * page 1, line 18 – line 21 * | 12 | |
| A | * page 11, line 30 – page 15, line 28; figure 2 * | 2 | |
| | * page 21, line 22 – page 33, line 20; figures 5(a),6,7 * | | |
| | * page 34, line 17 – line 26 * | | |
| | * page 36, line 26 – line 34 * | | |
| | * page 45, line 32 – page 46, line 4 * | | |
| | ----- | | |
| Y | SIVARAMAN ASWIN ET AL: "Efficient Personalized Speech Enhancement Through Self-Supervised Learning", IEEE JOURNAL OF SELECTED TOPICS IN SIGNAL PROCESSING, IEEE, US, vol. 16, no. 6, 10 June 2022 (2022-06-10), pages 1342-1356, XP011923732, ISSN: 1932-4553, DOI: 10.1109/JSTSP.2022.3181782 [retrieved on 2022-06-13] * Page 1345, section III. – Page 1349, section IV.C.; figure 3 * | 12 | |
| | ----- | | TECHNICAL FIELDS SEARCHED (IPC) G10L G06N |
| Y | XU YONG ET AL: "Cross-language transfer learning for deep neural network based speech enhancement", THE 9TH INTERNATIONAL SYMPOSIUM ON CHINESE SPOKEN LANGUAGE PROCESSING, IEEE, 12 September 2014 (2014-09-12), pages 336-340, XP032669153, DOI: 10.1109/ISCSLP.2014.6936608 [retrieved on 2014-10-24] * Page 336, section 2. – Page 339, section 4.; figures 1,4 * | 12 | |
| | ----- | | |
| | -/-- | | |

The present search report has been drawn up for all claims

| Place of search | Date of completion of the search | Examiner |
|---|---|---|
| Munich | 1 February 2024 | Virette, David |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

| | Europäisches Patentamt European Patent Office Office européen des brevets | **EUROPEAN SEARCH REPORT** | Application Number EP 23 19 6771 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 110 390 950 A (HANGZHOU PIONEER ELECTRONIC TECH CO LTD) 29 October 2019 (2019-10-29) * paragraph [0060] – paragraph [0073]; claim 1; figures 1,3 * ----- | 12 | |
| A | US 2019/354850 A1 (WATSON PATRICK [US] ET AL) 21 November 2019 (2019-11-21) * paragraph [0036] – paragraph [0037] * * paragraph [0047] – paragraph [0068] * ----- | 1-15 | |

| | TECHNICAL FIELDS SEARCHED (IPC) |
|---|---|

The present search report has been drawn up for all claims

| Place of search | Date of completion of the search | Examiner |
|---|---|---|
| Munich | 1 February 2024 | Virette, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 6771

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2024

| Patent document cited in search report | | Publication date | Patent family member(s) | | Publication date |
|---|---|---|---|---|---|
| WO 2022043712 | A1 | 03-03-2022 | EP | 4205106 A1 | 05-07-2023 |
| | | | GB | 2601102 A | 25-05-2022 |
| | | | US | 2023230576 A1 | 20-07-2023 |
| | | | WO | 2022043712 A1 | 03-03-2022 |
| CN 110390950 | A | 29-10-2019 | NONE | | |
| US 2019354850 | A1 | 21-11-2019 | CN | 110503204 A | 26-11-2019 |
| | | | US | 2019354850 A1 | 21-11-2019 |

EPO FORM P0459

For more details about this annex : see Official Journal of the European Patent Office, No. 12/82